# EUROPÄISCHE PATENTSCHRIFT

(11) **EP 4 164 103 B1**
(45) Veröffentlichungstag und Bekanntmachung des Hinweises auf die Patenterteilung: **24.07.2024**
(21) Anmeldenummer: 21201122.5
(22) Anmeldetag: 06.10.2021
(51) Int. Cl.: H02M 3/00, H02M 3/156, H02M 3/335, H02M 1/32

(54) **SCHALTUNGSANORDNUNG FÜR EINEN RESONANZWANDLER**
CIRCUIT ASSEMBLY FOR A RESONANCE CONVERTER
AGENCEMENT DE COMMUTATION POUR UN CONVERTISSEUR À RÉSONANCE

(43) Veröffentlichungstag der Anmeldung: 12.04.2023
(73) Patentinhaber: Siemens Aktiengesellschaft, 80333 München (DE)
(72) Erfinder: Hallak, Jalal, 1220 Wien (AT)
(74) Vertreter: Siemens Patent Attorneys

(56) Entgegenhaltungen:
- EP-B1- 2 936 668
- US-A1- 2012 147 629
- US-A1- 2015 049 520
- US-A1- 2015 249 394
- US-A1- 2021 058 004
- US-B2- 9 065 343

## Beschreibung

### Technisches Gebiet

Die gegenständliche Erfindung betrifft allgemein das Gebiet der Elektrotechnik, insbesondere den Bereich der Leistungselektronik und leistungselektronischer Schaltungen zur Stromversorgung. Im Speziellen bezieht sich die vorliegende Erfindung auf eine Schaltungsanordnung für einen Resonanzwandler. Der Resonanzwandler weist eine galvanische Trennung, insbesondere einen Transformator, auf. Weiterhin umfasst der Resonanzwandler primärseitig zumindest eine Resonanzinduktivität, zumindest eine Resonanzkapazität und zumindest zwei Schaltelemente, welchen jeweils einen Schaltfrequenz vorgegeben wird. Dabei fließt durch ein Schalten der zumindest zwei, primärseitig angeordneten Schaltelemente mit der jeweils vorgegebenen Schaltfrequenz ein Resonanzstrom durch die zumindest eine Resonanzinduktivität und durch die zumindest eine Resonanzkapazität.

### Stand der Technik

Heutzutage werden in modernen Stromversorgungen für elektrische Geräte immer häufiger Resonanzwandler (im Englischen auch als "resonant converter" bezeichnet) zur Energieübertragung eingesetzt. Resonanzwandler stellen eine spezielle schaltungstechnische Form eines Gleichspannungswandlers dar, welcher zur Energieübertragung mit einem Schwingkreis bzw. Resonanzkreis arbeitet. Dabei wandelt der Resonanzwandler eine eingangsseitige Gleichspannung in eine ein- oder mehrphasige Wechselspannung um, wobei er für einen optimalen Betrieb typischerweise mit annähernd konstanter Last betrieben wird. Die Wechselspannung kann durch eine ausgangsseitig angeordnete Gleichrichtereinheit wieder in eine vorgebbare Ausgangsspannung gleichgerichtet werden. Erfolgt keine Gleichrichtung auf der Ausgangsseite des Resonanzwandlers, so bezeichnet man den Resonanzwandler auch als Wechselrichter oder Inverter.

Der bekannte Stand der Technik auf diesem Gebiet wird durch die Dokumente US 2021/058004 A1 und US 2015/049520 A1 gebildet.

Aus dem Dokument US 2021/058004 A1 ist ein Gleichspannungswandler in Serie mit einem Aufwärtswandler bekannt.

Aus dem Dokument US 2015/049520 A1 ist ein Resonanzwandler mit einer Schaltungsanordnung zur Reduzierung der Resonanzkapazitätsspannung im Falle eines Überstroms bekannt.

Üblicherweise ist bei einem Resonanzwandler der Resonanzkreis aus zumindest einer Resonanzkapazität und zumindest einer Resonanzinduktivität aufgebaut. Der Resonanzkreis kann beispielsweise je nach Schaltungsaufbau auf einer Primär- oder Sekundärseite einer verwendeten galvanischen Trennung bzw. eines Transformators angeordnet und als Serien- oder Parallelschwingkreis aufgebaut sein. Üblicherweise wird der Resonanzkreis von der leistungsübertragenden Strecke mit der galvanischen Trennung bzw. mit dem Transformator gemeinsam mit zumindest eine Resonanzkapazität gebildet, wobei als Resonanzinduktivität z.B. die Streuinduktivität des Transformators allein oder die Streuinduktivität des Transformators gemeinsam mit zumindest einer weiteren Induktivität verwendet werden kann. Je nach Anwendung können damit Resonanzwandler z.B. als so genannte LLC-(=LCL)- oder LCC-Konverter ausgebildet sein.

Zur Regelung der Ausgangsspannung werden Resonanzwandler üblicherweise mit festem Tastverhältnis und variabler Frequenz bzw. Schaltfrequenz angesteuert. Die Schaltfrequenz dient als Basis für die Steuersignale zum Schalten der zumindest zwei, primärseitigen Schaltelemente, wodurch ein Resonanzstrom durch den Resonanzkreis fließt. Dabei entspricht eine Pulslänge des Steuersignals (z.B. Rechteck-Signal) des jeweiligen Schaltelements im Wesentlichen einer halben Schwingungsdauer des Resonanzkreises, um ein Einschalten und Ausschalten der zumindest zwei primärseitigen Schaltelemente in einem Schwingungsnulldurchgang Stroms oder der Spannung) - d.h. um so genanntes Zero Voltage Switching (kurz: ZVS) oder so genanntes Zero Current Switching (kurz: ZCS) zu ermöglichen. Es kann z.B. zwischen Resonanzwandlern mit Zero Voltage Switching und Resonanzwandler mit Zero Current Switching unterschieden werden, wobei meist beides zusammenfällt. Das bedeutet, dass der Bereich der Schaltfrequenz, welche jeweils den primärseitigen Schaltelementen vorgegeben wird bzw. mit welcher diese geschaltet werden können, durch den Resonanzkreis - insbesondere durch die zumindest eine Resonanzinduktivität und durch die zumindest eine Resonanzkapazität des Resonanzwandlers - mitbestimmt wird. Der Resonanzkreis sorgt bei einem Resonanzwandler üblicherweise dafür, dass die Schaltelemente im Wesentlichen im Strom- und/oder Spannungsnulldurchgang geschaltet werden. Dadurch werden während der Schaltvorgänge die Verlustleistung minimiert sowie elektromagnetische Störungen geringgehalten.

Resonanzwandler weisen aufgrund ihrer frequenzabhängigen Komponenten, wie z.B. Transformator, Kapazitäten und gegebenenfalls zusätzliche Induktivitäten, ein frequenzabhängiges Spannungsübersetzungsverhältnis zwischen Ausgangsspannung und Eingangsspannung auf. Durch beispielsweise entsprechende Wahl der Windungszahlen des im Resonanzwandler eingesetzten Transformators kann dieses Übersetzungsverhältnis weiter angepasst werden. Dieses Übersetzungsverhältnis ist jedoch bis auf eine spezielle Schaltfrequenz lastabhängig. Da Resonanzwandler in der Regel aus zwei oder mehreren frequenzabhängigen Komponenten (z.B. Kondensatoren, Spulen, Transformatoren, etc.) bestehen, gibt es oft mehrere Resonanzfrequenzen, wobei meist nur bei einer bestimmten Resonanzfrequenz ein lastunabhängiges Übersetzungsverhältnis auftritt. Diese bestimmte Resonanzfrequenz ist die Frequenz, welche bei der Resonanz der Resonanzinduktivität und der Resonanzkapazität auftritt und nicht bei einer geringen Resonanzfrequenz von Transistor-Hauptinduktivität plus Resonanzinduktivität und der Resonanzkapazität. Nur bei einem Betrieb mit exakt dieser Resonanzfrequenz (d.h. der Resonanzfrequenz, welche von Resonanzinduktivität und Resonanzkapazität festgelegt wird) als Schaltfrequenz für primärseitigen Schaltelemente sind die Schaltverluste des Resonanzwandlers nahezu null bzw. sehr gering. Der Resonanzwandler arbeitet dann mit einem sehr hohen Wirkungsgrad und am effizientesten und weist bei der Resonanzfrequenz ein fast konstantes Übersetzungsverhältnis zwischen Eingangsspannung und Ausgangsspannung auf, welches sich nur am Windungszahlverhältnis zwischen Primär- und Sekundärwicklungen des verwendeten Transformators orientiert.

Bei einem Überlastfall (z.B. Überlast, Kurzschluss, etc.) kann es allerdings notwendig sein, die Ausgangsspannung des Resonanzwandlers abzusenken, um beispielsweise eine geforderte Strom-Spannungs-Kennlinie für einen Strombegrenzung bzw. bis zum Kurzschluss zu gewährleisten. Um eine derartige, notwendige Absenkung der Ausgangsspannung des Resonanzwandlers zu erreichen, kann beispielsweise die Schaltfrequenz bzw. Arbeitsfrequenz des Resonanzwandlers über die Resonanzfrequenz hinaus angehoben werden. D.h., die primärseitigen Schaltelemente werden mit einer höheren Schaltfrequenz als mit der Resonanzfrequenz betrieben. Dabei weicht der Resonanzwandler vom idealen Betrieb mit der Resonanzfrequenz ab. Es entstehen dadurch höhere Verluste - trotz einer sinkenden Ausgangsleistung. Durch die höhere Schaltfrequenz können z.B. die primärseitigen Schaltelemente nicht mehr im Spannungsnulldurchgang (so genanntes Zero Voltage Switching oder ZVS) oder im Stromnulldurchgang (so genanntes Zero Current Switching oder ZCS) geschalten werden, sondern werden beispielsweise "hart" ein-und ausgeschaltet, was eine erhebliche Verlustleistung in den Schaltelementen zur Folge hat. Weiterhin entstehen durch die Steigerung der Schaltfrequenz beispielsweise auch erhöhte Verluste am Transformator, an einer gegebenenfalls vorhandenen zusätzlichen Resonanzinduktivität sowie an einer sekundärseitig angeordneten Gleichrichtereinheit (z.B. Dioden, Synchron-Gleichrichter).

Um massiv steigende Verluste im Resonanzwandler bei Absenkung der Ausgangsspannung durch Anheben der Schaltfrequenz über die Resonanzfrequenz hinaus zu verhindern, besteht beispielsweise die Möglichkeit, dem Resonanzwandler eingangsseitig eine zusätzlich Wandler-Stufe, insbesondere einen Tiefsetzsteller, vorzuschalten. Durch Vorschalten der zusätzlichen Wandler-Stufe bzw. eines Tiefsetzsteller wird sichergestellt, dass der Resonanzwandler wieder mit einem fixen Übersetzungsverhältnis bzw. möglichst im Resonanzbetrieb arbeiten kann, indem durch die vorgeschaltete Wandler-Stufe die Eingangsspannung des Resonanzwandler entsprechend zur abgesenkten Ausgangsspannung des Resonanzwandlers eingestellt wird. Allerdings ist das Vorschalten der zusätzlichen Wandler-Stufe mit erhöhtem Platzbedarf und Kosten verbunden. Weiterhin ist diese zusätzliche Wandler-Stufe nicht nur z.B. im Überlastfall im Betrieb, sondern auch dann, wenn der Resonanzwandler im Normalbetrieb mit der Resonanzfrequenz bzw. bei Nennlast betrieben wird. Dadurch entsteht während des Normalbetriebs des Resonanzwandlers eine unnötige Verlustleistung durch die vorgeschaltete Wandler-Stufe.

### Darstellung der Erfindung

Der Erfindung liegt daher die Aufgabe zugrunde, eine Schaltungsanordnung für einen Resonanzwandler anzugeben, welche für einen Überlastfall eine Reduktion der Ausgangsspannung auf effiziente und platzsparende Weise und ohne zusätzliche Verlustleistung ermöglicht.

Diese Aufgabe wird durch eine Schaltungsanordnung für einen Resonanzwandler gemäß dem unabhängigen Anspruch gelöst. Vorteilhafte Ausführungsformen der vorliegenden Erfindung sind in den abhängigen Ansprüchen beschrieben.

Erfindungsgemäß erfolgt die Lösung der Aufgabe durch eine Schaltungsanordnung eines Resonanzwandler der eingangs erwähnten Art, bei welcher ein bidirektionales Schaltelement in einem Strompfad des Resonanzstroms durch die zumindest eine Resonanzinduktivität und durch die zumindest eine Resonanzkapazität angeordnet ist. Weiterhin ist ein Diodenpaar vorgesehen, welches als Reihen- bzw. Serienschaltung angeordnet ist. Dabei ist eine Mitte der Serienschaltung des Diodenpaars mit einem Anschluss der zumindest einen Resonanzinduktivität oder mit einem Anschluss der zumindest einen Resonanzkapazität und ein jeweiliges Ende der Serienschaltung des Diodenpaars mit jeweils einem Schaltelement der zumindest zwei primärseitigen Schaltelemente derart verbunden sind, dass eine Funktionalität eines Tiefsetzstellers integriert ist, in dem Fall dass das bidirektionale Schaltelement synchronisiert bzw. annähernd zeitgleich mit einem jeweils einzuschaltenden Schaltelement der zumindest zwei primärseitigen Schaltelemente eingeschaltet wird und vor einem jeweils auszuschaltenden Schaltelement der zumindest zwei primärseitigen Schaltelemente ausgeschaltet wird. Dabei sind die zumindest eine Resonanzinduktivität als Induktivität und das Diodenpaars als Freilaufdioden für die Funktionalität des Tiefsetzstellers genutzt.

Der Hauptaspekt der erfindungsmäßig vorgeschlagenen Lösung besteht darin, dass ein Hinzufügen eines bidirektionalen Schaltelements und des Diodenpaars und durch entsprechendes Schalten des bidirektionalen Schaltelements - d.h. ein mit dem jeweils für die Ansteuerung des Resonanzwandlers einzuschaltenden Schaltelement synchronisierten Einschalten des bidirektionalen Schaltelements, aber ein Ausschalten vor dem jeweils eingeschalteten Schaltelements für die Ansteuerung des Resonanzwandlers - auf einfache Weise eine Funktionalität eines Tiefsetzsteller - sowohl für positive als auch für negative Stromhalbwellen - in den Resonanzwandler integriert wird. Das bedeutet, es wird eine Funktionalität eines Tiefsetzstellers in den Resonanzwandler integriert, durch welche ein Betrag einer Ausgangsspannung stets kleiner als ein Betrag einer Eingangsspannung ist bzw. ein Übersetzungsverhältnis des Resonanzwandlers verändert wird. D.h. wird das im Strompfad des Resonanzstroms angeordnete, bidirektionale Schaltelement geschaltet, so bildet das bidirektionale Schaltelement gemeinsam mit der zumindest einen Resonanzinduktivität und dem Diodenpaar als Freilaufdioden einen Tiefsetzsteller, durch welchen die Aufgabe erfüllt wird, im Bedarfsfall (z.B. bei Überlast, Kurzschluss, etc.) eine am Resonanzwandler anliegende Eingangsspannung zumindest für Teile der Schaltperiode des Resonanzwandlers abzusenken und damit die Ausgangsspannung zu reduzieren. Die zumindest zwei, primärseitigen Schaltelemente zur Ansteuerung des Resonanzwandlers können idealerweise auch im Überlastfall mit der Resonanzfrequenz als Schaltfrequenz (d.h. wie im Normalbetrieb bzw. im Resonanzbetrieb) getaktet werden, wodurch die Schaltverluste weiterhin möglichst gering bleiben.

Durch die erfindungsgemäße Schaltungsanordnung kann eine dem Resonanzwandler vorgeschaltete Wandler-Stufe bzw. Tiefsetzsteller-Stufe sowie eine der Wandler-Stufe nachgeschaltete bzw. dem Resonanzwandler vorgeschaltete Zwischenkreiskapazität eingespart werden. Dadurch wird auch ein besserer Wirkungsgrad erzielt, da eine Verlustleistung einer vorgelagerten Tiefsetzsteller-Stufe wegfällt. Weiterhin kann die Schaltungsanordnung durch den Wegfall der Tiefsetzsteller-Stufe, insbesondere einer Drossel des Tiefsetzstellers, sowie der Zwischenkreiskapazität platzsparender ausgeführt sein.

Es ist vorteilhaft, wenn das bidirektionale Schaltelement in Anhängigkeit von einer Ausgangsspannung des Resonanzwandlers gesteuert wird. D.h. das bidirektionale Schaltelement wird - sofern es taktet - idealerweise pulsweitenmoduliert bzw. mit konstanter Frequenz und veränderlichen Tastgrad des Steuersignals geschaltet. Das bidirektionale Schaltelement wird idealerweise synchronisiert mit dem jeweils einzuschaltenden, primärseitigen Schaltelement eingeschaltet. D.h., das bidirektionale Schaltelement wird möglichst zeitgleich bzw. maximal zeitlich geringfügig versetzt mit dem jeweils einzuschaltenden Schaltelement des Resonanzwandlers eingeschaltet. Ein Ausschaltzeitpunkt des bidirektionalen Schaltelements kann durch die spannungsabhängige Ansteuerung allerdings derart in einer halben Schaltperiode des jeweils einzuschaltenden Schaltelements festgelegt werden, dass eine Reduktion auf einen z.B. vorgebbaren Wert der Ausgangsspannung des Resonanzwandlers erreicht wird. So kann z.B. durch rascheres Ausschalten des bidirektionalen Schaltelements eine stärkere Reduktion erzielt werden, als wenn dieses länger eingeschalten bleibt.

Es ist günstig, wenn während eines Normalbetriebs des Resonanzwandlers das bidirektionale Schaltelement dauerhaft eingeschaltet ist. Auf diese einfache Weise ist die Funktionalität des Tiefsetzstellers weggeschaltet. Die Schaltungsanordnung arbeitet als Resonanzwandler im Normalbetrieb bzw. im Resonanzbetrieb.

Alternativ ist idealerweise eine Überbrückungseinheit vorgesehen ist, welche parallel zum bidirektionalen Schaltelement angeordnet ist. Durch Schließen der Überbrückungseinheit ist das bidirektionale Schaltelement überbrückt bzw. kurzgeschlossen. D.h., arbeitet die Schaltungsanordnung als Resonanzwandler im Normal- bzw. Resonanzbetrieb, so ist die Überbrückungseinheit geschlossen und das bidirektionale Schaltelement kann ausgeschaltet sein. Dadurch werden auf einfache Weise Leitverluste, welche durch ein dauerhaft eingeschaltetes, bidirektionales Schaltelement entstehen würden, gesenkt. Sollte ein Überlastfall eintreten, welcher eine Absenkung der Ausgangsspannung erfordert, so kann beispielsweise bis zum Öffnen der Überbrückungseinheit die den primärseitigen Schaltelementen vorgegebene Schaltfrequenz kurzfristig erhöht werden. Ist die Überbrückungseinheit ausgeschaltet und beginnt das bidirektionale Schaltelement zu schalten, so können die primärseitigen Schaltelemente wieder mit der Resonanzfrequenz als Schaltfrequenz angesteuert werden. Als Überbrückungseinheit ist ein Halbleiterschalter, ein Relais oder ein so genanntes Mikro-Elektronisch-Mechanisches-System, kurz MEMS, einsetzbar.

Eine vorteilhafte Ausführungsform der Schaltanordnung sieht vor, dass die zumindest zwei primärseitigen Schaltelemente eingangsseitig als Halbbrückenschaltung angeordnet sind. Die Ausführung als Halbbrückenschaltung umfasst zwei Schaltelemente, welche z.B. mittels entsprechender Ansteuerschaltungen alternierend bzw. abwechselnd mit einer kurzen Pause (Totzeit) schalten. Dabei ist für die Integration der Funktionalität des Tiefsetzstellers die Mitte der Serienschaltung des Diodenpaars mit einem Anschluss der zumindest einen Resonanzinduktivität verbunden, welcher einem ersten Ende des bidirektionalen Schaltelements verbunden ist. Weiterhin weist die zumindest eine Resonanzkapazität durch zwei in Serie angeordnete Kapazitäten auf, wobei eine Mitte der Serienschaltung der zwei Kapazitäten mit einem zweiten Ende des bidirektionalen Schaltelements und die jeweiligen Enden der Serienschaltung der zwei Kapazitäten mit den jeweiligen Enden der Serienschaltung des Diodenpaars verbunden sind.

Eine zweckmäßige Ausgestaltung der erfindungsgemäßen Schaltungsanordnung sieht primärseitig zwei weitere Schaltelemente vorgesehen sind, welche mit den zumindest zwei primärseitigen Schaltelementen als Vollbrückenschaltung angeordnet sind. Bei einer Vollbrückenschaltung kommen üblicherweise vier Schaltelemente mit entsprechender Ansteuerschaltung zum Einsatz. Es werden immer zwei Schaltelemente gleichzeitig eingeschaltet (z.B. immer die diagonal gegenüberliegenden), darauf folgt eine Totzeit, dann werden die beiden anderen Schaltelemente eingeschaltet. Während die Halbbrückenschaltung einfacher aufgebaut und kostengünstiger ist, hat eine Vollbrückenschaltung den Vorteil der geringeren Strombelastung der Schaltelemente im Vergleich zur Halbbrückenschaltung, dies bringt zwar geringere Verluste, aber im Regelfall überwiegen die Vorteile einer Vollbrückenschaltung erst bei hohen Leistungen von deutlich >1kW.

Eine spezielle Ausführungsform der Schaltungsanordnung bei Verwendung einer Vollbrückenschaltung sieht vor, dass die Mitte der Serienschaltung des Diodenpaars mit einem Anschluss der zumindest einen Resonanzinduktivität verbunden ist, welcher an einen ersten Anschluss der zumindest einen Resonanzkapazität angebunden ist. Weiterhin ist ein zweiter Anschluss der zumindest einen Resonanzkapazität mit einem ersten Anschluss des bidirektionalen Schaltelements verbunden. Es ist an einen zweiten Anschluss des bidirektionalen Schaltelements eine Mitte einer Serienschaltung aus den zwei, weiteren primärseitigen Schaltelementen angebunden. Weiterhin sind die jeweiligen Enden der Serienschaltung des Diodenpaars jeweils mit einem Schaltelement der zumindest zwei primärseitigen Schaltelemente sowie jeweils mit einem der zwei, weiteren primärseitigen Schaltelemente verbunden.

Alternativ kann die Schaltungsanordnung bei Verwendung einer Vollbrückenschaltung idealerweise derart ausgestaltet sein, dass die zumindest eine Resonanzkapazität mit einem ersten Anschluss an die zumindest eine Resonanzinduktivität angebunden ist. Weiterhin ist ein zweiter Anschluss der Resonanzkapazität mit einem ersten Anschluss des bidirektionalen Schaltelements und mit der Mitte der Serienschaltung des Diodenpaars verbunden. An einen zweiten Anschluss des bidirektionalen Schaltelements ist eine Mitte einer Serienschaltung bzw. Halbbrückenschaltung aus den zwei, weiteren primärseitigen Schaltelementen angebunden. Weiterhin sind wieder die jeweiligen Enden der Serienschaltung des Diodenpaars jeweils mit einem Schaltelement der zumindest zwei primärseitigen Schaltelemente sowie jeweils mit einem der zwei, weiteren primärseitigen Schaltelemente verbunden.

Es ist weiterhin vorteilhaft, wenn das bidirektionale Schaltelement aus antiseriell verschalteten Transistoren, insbesondere von Feldeffekttransistoren oder MOSFETs, aufgebaut ist. Dabei bezeichnet der Begriff "antiseriell" einen Reihenschaltung von Transistoren, insbesondere Feldeffekttransistoren, in entgegengesetzter Polung. D.h., dass z.B. ein Sourceanschluss eines ersten Feldeffekttransistors mit einem Sourceanschluss eines zweiten Feldeffekttransistors leitungstechnisch verbunden ist. Ferner ist es möglich, dass ein Drainanschluss des ersten Feldeffekttransistors mit einem Drainanschluss des zweiten Feldeffekttransistors leitungstechnisch verbunden ist. Eine derartige, antiserielle Verschaltung von Transistoren ist beispielsweise aus der Schrift EP 1 850 470 B1 bekannt.

Alternativ kann es zweckmäßig sein, wenn als bidirektionales Schaltelement ein Mikro-Elektronisch-Mechanisches-System, kurz MEMS, vorgesehen ist. Ein MEMS stellt einen elektronischen Schalter dar, welche sehr einfach von einer Steuereinheit angesteuert werden kann, um einen Stromfluss zu begrenzen und/oder zu schalten. MEMS sind üblicherweise winzige Halbleiterbauelemente, welche idealerweise Logikelemente und mikromechanische Strukturen (z.B. Anker, welche über elektrostatische Kräfte bewegt werden) in einem Bauelement vereinen.

### Kurzbeschreibung der Zeichnung

Die Erfindung wird nachfolgend in beispielhafter Weise anhand der beigefügten Figuren erläutert. Es zeigen dabei:
Figur 1 in schematischer und beispielhafter Weise ein Schaltungsanordnung eines erfindungsgemäßen Resonanzwandlers
Figur 2 beispielhaft einen zeitlichen Verlauf der Steuersignale der Schaltelemente der erfindungsgemäßen Resonanzwandler-Schaltungsanordnung
Figur 3a und 3b beispielhaft und schematisch weitere Ausführungsformen der erfindungsgemäßen Schaltungsanordnung eines Resonanzwandlers

### Ausführung der Erfindung

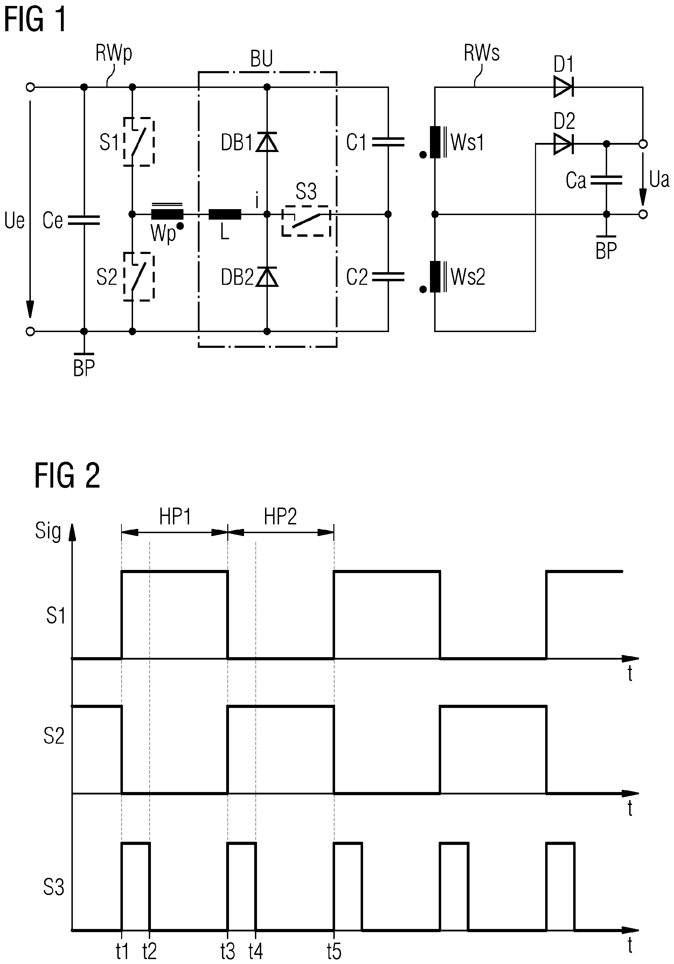

In Figur 1 ist beispielhaft und schematisch eine Ausführungsform eines Resonanzwandlers dargestellt, in welchen erfindungsgemäß eine Funktionalität BU eines Tiefsetzsteller integriert ist.

Eingangsseitig wird eine Eingangsspannung Ue (Gleichspannung) an den Resonanzwandler angelegt, welche auf ein Bezugspotential BP bezogen sein kann. Es kann eingangsseitig auch eine Eingangskapazität Ce angeordnet sein. Weiterhin sind parallel zur Eingangsspannung Ue bzw. zur Eingangskapazität Ce zwei Schaltelemente S1, S2 geschaltet, welche als Halbbrückenschaltung angeordnet sind. D.h. ein erstes Schaltelement S1 und ein zweites Schaltelement S2 sind zwischen einem Potential der Eingangsspannung Ue und dem Bezugspotential BP in Reihe bzw. in Serie geschaltet. Als Schaltelemente S1, S2 sind beispielsweise MOS-FETs, bipolare Transistoren oder IGBTs einsetzbar.

Der Resonanzwandler weist eine galvanischer Trennung auf, welche den Resonanzwandler in eine Primärseite RWp und in eine Sekundärseite RWs trennt. Als galvanische Trennung wird z.B. ein Transformator verwendet, welcher eine Primärwicklung Wp auf der Primärseite RWp und z.B. zwei Sekundärwicklungen Ws1, Ws2 auf der Sekundärseite RWs umfasst. Die Sekundärwicklungen Ws1, Ws2 können entweder als zwei getrennte Spulen Ws1, Ws2 oder als eine Spule mit Mittelanzapfung ausgeführt sein, wobei die Mittelanzapfung die Spule in eine erste und in eine zweite Sekundärwicklung Ws1, Ws2 unterteilt.

Weiterhin ist auf der Sekundärseite RWs eine Gleichrichtereinheit vorgesehen, welche beispielsweise zwei Dioden D1, D2 umfasst. Durch die Gleichrichtereinheit wird aus einer Wechselspannung, in welche die an der Primärseite RWp anliegende Eingangsspannung Ue umgewandelt wird, auf der Sekundärseite RWs in eine vorgebbare Ausgangsspannung Ua gleichgerichtet. Dazu ist eine Anode einer ersten Diode D1 an einen Anschluss der ersten Sekundärwicklung Ws1 und eine Anode einer zweiten Diode D2 an einen Anschluss der zweiten Sekundärwicklung Ws2 angebunden. Die Kathoden der Dioden D1, D2 sind miteinander verbunden und bilden eine ersten Anschluss für eine Last. Der zweite Anschluss für die Last wird von der Mitte zwischen den Sekundärwicklungen Ws1, Ws2 bzw. der Mittelanzapfung gebildet. An den Anschlüssen fällt dann die Ausgangsspannung Ua des Resonanzwandlers ab, wobei parallel dazu eine Ausgangskapazität Ca angeordnet sein kann. Die Ausgangsspannung Ua kann ebenfalls auf das Bezugspotential BP bezogen sein. Alternativ kann zu einer Gleichrichtereinheit mit zwei Dioden D1, D2 kann auch ein so genannter Sychrongleichrichter mit zwei ansteuerbaren Schaltelementen (z.B. MOSFETs, Galliumnitrid-Schaltern, etc.) verwendet werden, wobei die erste Diode D1 durch ein Schaltelement und die zweite Diode D2 durch ein weiteres Schaltelement ersetzt wird.

Alternativ kann sekundärseitig auch nur eine Sekundärwicklung Ws1, Ws2 angeordnet sein, welche z.B. mit vier Gleichrichterdiode D1, D2 ausgestattet ist. Eine weitere Ausführung der Sekundärseite RWs kann beispielsweise mehrere Sekundärwicklungen Ws1, Ws2 mit zugehörigen Gleichrichtereinheiten aufweisen.

Auf der Primärseite RWp ist eingangsseitig eine Mitte der Halbbrückenschaltung der zwei Schaltelemente S1, S2 mit einem Anschluss der Primärwicklung Wp des Transformators verbunden. Der andere Anschluss der Primärwicklung Wp ist mit dem Resonanzkreis des Resonanzwandler verbunden, welcher zumindest eine Resonanzinduktivität L und zumindest eine Resonanzkapazität C1, C2 aufweist. Im einfachsten Fall kann der Resonanzkreis aus einer Streuinduktivität des Transformators als Resonanzinduktivität L und zumindest einer Resonanzkapazität C1, C2 gebildet werden.

Bei der in Figur 1 beispielhaft dargestellten Ausführungsform der erfindungsgemäßen Schaltungsanordnung ist an den anderen Anschluss der Primärwicklung Wp ein erster Anschluss der Resonanzinduktivität L angebunden. Ein zweiter Anschluss der Resonanzinduktivität L ist mit einer Mitte einer Serienschaltung aus zwei Resonanzkapazitäten C1, C2 verbunden. Dabei ist in einem Strompfad i eines Resonanzstroms, welcher durch die Resonanzinduktivität L und zumindest eine der zwei Resonanzkapazitäten C1, C2 fließt, ein bidirektionales Schaltelement S3 angeordnet. Bei der in Figur 1 beispielhaft dargestellten Ausführungsform ist das bidirektionale Schaltelement S3 z.B. zwischen dem zweiten Anschluss der Resonanzinduktivität L und der Mitte der Serienschaltung der zwei Resonanzkapazitäten C1, C2 eingefügt. Das bidirektionale Schaltelement S3 kann dabei z.B. aus antiseriell verschalteten Transistoren (z.B. MOSFETs) aufgebaut sein. Alternativ kann z.B. ein so genanntes Mikro-Elektronisch-Mechanisches-System, kurz MEMS, als bidirektionales Schaltelement S3 eingesetzt werden.

Weiterhin ist ein Diodenpaar DB1, DB2 vorgesehen, welches als Reihen- bzw. Serienschaltung angeordnet ist. Eine Mitte der Serienschaltung des Diodenpaars DB1, DB2 ist mit dem zweiten Anschluss der zumindest einen Resonanzinduktivität L sowie mit jenem Anschluss des bidirektionalen Schaltelements S3 verbunden, welches an den zweiten Anschluss der der zumindest einen Resonanzinduktivität L angebunden ist. Ein jeweiliges Ende der Serienschaltung des Diodenpaars DB1, DB2 ist jeweils mit einem jeweils entsprechenden Ende der Serienschaltung der Resonanzkapazitäten C1, C2 sowie jeweils mit einem Ende der Halbbrückenschaltung der primärseitigen Schaltelemente S1, S2 verbunden. Dabei ist beispielsweise eine erste Diode DB1 des Diodenpaars DB1, DB2 mit einer ersten Resonanzkapazität C1 und einem ersten Schaltelement S1 der Halbbrückenschaltung verbunden, wobei von dieser Verbindung z.B. ein erster Anschluss für die Eingangsspannung Ue gebildet wird. Eine zweite Diode DB2 des Diodenpaars DB1, DB2 ist beispielsweise mit einer zweiten Resonanzkapazität C2 und einem zweiten Schaltelement S2 der Halbbrückenschaltung verbunden, wobei von dieser Verbindung z.B. ein zweiter Anschluss für die Eingangsspannung Ue gebildet wird, welcher beispielsweise auf das Bezugspotential BP bezogen ist.

Um die Eingangsspannung Ue in die vorgebbare Ausgangsspannung Ua auf der Sekundärseite RWs umzuwandeln, werden die primärseitig angeordneten Schaltelemente S1, S2 des Resonanzwandlers abwechselnd mit einer kurzen Pause - einer so genannten Totzeit - geschaltet. Für ein entsprechendes Takten wird den Schaltelementen S1, S2 jeweils eine Schaltfrequenz in Form von Steuersignalen (z.B. rechteckförmige Steuersignale) vorgegeben. Dadurch werden die Schaltelemente S1, S2 der Halbbrückenschaltung alternierend mit einer kurzen Pause bzw. Totzeit ein- und jeweils in einem Strom- und/oder Spannungsnulldurchgang ausgeschaltet.

Weiterhin ist im Normalbetrieb des Resonanzwandlers - d.h. im Betrieb bei Nennlast - das bidirektionale Schaltelement S3 dauerhaft eingeschaltet. Alternativ kann das bidirektionale Schaltelement S3 im Normalbetrieb durch eine Überbrückungseinheit (z.B. Halbleiterschalter, Relais, MEMS, etc.) überbrückt bzw. kurzgeschlossen sein. D.h. die in Figur 1 beispielhaft dargestellte Schaltung kann als LLC-Resonanzwandler betrachtet werden, bei welchem der zweite Anschluss der Resonanzinduktivität L direkt an die Mitte der Serienschaltung der Resonanzkapazitäten C1, C2 angebunden ist. Die primärseitigen Schaltelemente S1, S2 werden idealerweise mit der Resonanzfrequenz geschaltet bzw. der Resonanzwandler arbeitet im Resonanzbetrieb.

Tritt allerdings ein Ereignis (z.B. Überlast, Kurzschluss, etc.) ein, bei welchem eine Absenkung der Ausgangsspannung Ua erforderlich ist, so beginnt das bidirektionale Schaltelement S3 innerhalb einer Halbperiode der Schaltfrequenz der Schaltelemente S1, S2 zu schalten. Dabei ist das Steuersignal des bidirektionalen Schaltelements S3 mit den Steuersignalen der Schaltelemente S1, S2 derart synchronisiert, dass das bidirektionale Schaltelement S3 mit dem jeweils einzuschaltenden Schaltelement S1, S2 eingeschaltet wird. Dabei kann ein geringfügiger Zeitversatz - z.B. voreilend oder nacheilend - zwischen dem Einschalten des bidirektionalen Schaltelement S3 und dem einzuschaltenden Schaltelement S1, S2 vorgesehen sein, um z.B. Schaltverluste aufzuteilen bzw. zu optimieren.

Das bidirektionale Schaltelement S3 wird allerdings innerhalb einer halben Schaltperiode des jeweils eingeschalteten Schaltelement S1, S2 des Resonanzwandlers ausgeschaltet. D.h. das bidirektionale Schaltelement S3 wird ausgeschaltet, bevor das jeweils eingeschaltete (= auszuschaltende) Schaltelement S1, S2 ausgeschaltet wird. Dabei wird das bidirektionale Schaltelement S3 in Abhängigkeit von der Ausgangsspannung Ua des Resonanzwandlers - d.h. pulsweitenmoduliert - angesteuert. Dies wird in der Folge anhand der Figur 2 noch näher erläutert.

Durch das Ein- und Ausschalten des bidirektionalen Schaltelements S3 bilden das bidirektionale Schaltelement S3 gemeinsam mit der Resonanzinduktivität L und dem Diodenpaar DB1, DB2 die Funktionalität BU eines Tiefsetzsteller, wobei die Dioden DB1, DB2 des Diodenpaars als Freilaufdioden fungieren. Dadurch wird - wie bei einem Tiefsetzsteller - für zumindest einen Teil der halben Schaltperiode des jeweils eingeschalteten Schaltelements S1, S2 die Eingangsspannung Ue des Resonanzwandlers reduziert und in der Folge die Ausgangsspannung Ua abgesenkt. Die Schaltelemente S1, S2 der Halbbrückenschaltung takten weiterhin wie im Normalbetrieb bzw. im Resonanzbetrieb mit der Resonanzfrequenz des Resonanzwandlers als Schaltfrequenz.

Figur 2 zeigt beispielhaft einen zeitlichen Verlauf der Steuersignale der primärseitigen Schaltelemente S1, S2 des Resonanzwandlers sowie bidirektionalen Schaltelements S3, welches im Strompfad i des durch die Resonanzinduktivität L und die Resonanzkapazitäten C1, C2 fließenden Resonanzstroms angeordnet ist, für den Fall, dass eine Absenkung der Ausgangsspannung Ua des Resonanzwandlers erforderlich ist.

Dabei ist auf einer horizontalen Achse die Zeit t aufgetragen und auf einer vertikalen Achse die jeweilige Steuersignalspannung Sig. Ein erster zeitlicher Verlauf zeigt dabei das Steuersignal des ersten Schaltelements S1 der Halbbrückenschaltung und ein zweiter zeitlicher Verlauf das Steuersignal des zweiten Schaltelements S2 der Halbbrückenschaltung, wobei die Totzeiten beim Schalten der Schaltelemente S1, S2 der Einfachheit halber nicht eingezeichnet wurden. In einem dritten Verlauf ist das Steuersignal des bidirektionalen Schaltelements S3 dargestellt. Die Steuersignale weisen dabei z.B. die Form von Rechtecksignalen auf.

Aus dem ersten und zweiten Verlauf der Steuersignale des ersten und zweiten Schaltelements S1, S2 ist ersichtlich, dass die Schaltelemente S1, S2 alternierend geschaltet werden. Dabei ist z.B. das erste Schaltelement S1 der Halbbrückenschaltung in einer ersten Halbperiode HP1 des Steuersignals eingeschaltet und in einer zweiten Halbperiode HP2 des Steuersignals ausgeschaltet. Das zweite Schaltelement S2 der Halbbrückenschaltung ist dann in der ersten Halbperiode HP1 des Steuersignals ausgeschaltet und in der zweiten Halbperiode HP2 eingeschaltet. Die Steuersignale für das Schalten der Schaltelemente S1, S2 basieren auf der jeweils den Schaltelementen S1, S2 vorgegebenen Schaltfrequenz, welche der Resonanzfrequenz des Resonanzwandlers entspricht.

Ist eine Absenkung der Ausgangsspannung Ua des Resonanzwandlers erforderlich bzw. soll die integrierte Funktionalität BU des Tiefsetzstellers aktiviert werden, so wird in einem ersten Zeitpunkt t1 mit dem Beginn der ersten Halbperiode HP1 des Steuersignals des ersten Schaltelements S1 bzw. mit dem Einschalten des ersten Schaltelements S1 der Halbbrückenschaltung des Resonanzwandlers das bidirektionale Schaltelement S3 möglichst zeitgleich eingeschaltet. Eine gegebenenfalls parallel zum bidirektionalen Schaltelement S3 angebrachte Überbrückungseinheit (z.B. Halbleiterschalter, Relais, MEMS, etc.) wird dabei geöffnet, um die Überbrückung des bidirektionalen Schaltelements S3 zu beenden. Bis zum sicheren Öffnen der Überbrückungseinheit kann der Resonanzwandler zumindest kurzfristig mit deutlich höherer Schaltfrequenz (als die Resonanzfrequenz) arbeiten. Eine dadurch deutlich höherer Verlustleistung kann in diesem Fall toleriert werden, da es sich um eher kurze Zeitspannung im Bereich von wenigen Millisekunden bis zu z.B. wenigen 10ms handelt.

Zu einem zweiten Zeitpunkt t2 wird dann das bidirektionale Schaltelement S3 ausgeschaltet. Der zweite Zeitpunkt t2 wird durch einen Wert der abzusenkenden Ausgangsspannung Ua des Resonanzwandlers vorgegeben. D.h. das bidirektionale Schaltelement S3 ist spannungsgesteuert in Abhängigkeit von der Ausgangsspannung Ua bzw. wird pulsweitenmoduliert gesteuert. Das erste Schaltelement S1 der Halbbrückenschaltung bleibt weiterhin bis zu einem dritten Zeitpunkt t3 - einem Ende der ersten Halbperiode HP1 - eingeschaltet. Zum dritten Zeitpunkt t3 wird dann auch das erste Schaltelement S1 der Halbbrückenschaltung ausgeschaltet.

Während der ersten Halbperiode HP1 arbeitet damit die Resonanzwandler-Schaltungsanordnung zwischen dem ersten und dem zweiten Zeitpunkt t1, t2 als reiner Resonanzwandler. In einer Phase vom zweiten Zeitpunkt t2 bis zum dritten Zeitpunkt t3 fließt - durch das Ausschalten des bidirektionalen Schaltelements S3 die in der Resonanzinduktivität L gespeicherte Energie über die erste Diode DB1 des Diodenpaars DB1, DB2, welche als Freilaufdiode fungiert, und über die Primärwicklung Wp des Transformators, wobei in der ersten Sekundärwicklung Ws1 des Transformators auf der Sekundärseite RWs ein Strom induziert wird. Das zweite Schaltelement S2 der Halbbrückenschaltung ist während der gesamten ersten Halbperiode HP1 ausgeschaltet.

Zum dritten Zeitpunkt t3 beginnt die zweite Halbperiode HP2 der Steuersignale der beiden Schaltelemente S1, S2 der Halbbrückenschaltung. Dabei wird - verzögert um eine nicht dargestellte Totzeit - das zweite Schaltelement S2 der Halbbrückenschaltung eingeschaltet. Synchronisiert bzw. annähernd gleichzeitig mit dem zweiten Schaltelement S2 wird zum dritten Zeitpunkt t3 auch wieder das bidirektionale Schaltelement S3 eingeschaltet. Zu einem vierten Zeitpunkt t4 wird dann das bidirektionale Schaltelement S3 wieder ausgeschaltet. Das zweite Schaltelement S2 der Halbbrückenschaltung bleibt weiterhin bis zu einem fünften Zeitpunkt t5 - einem Ende der zweiten Halbperiode HP2 - eingeschaltet. Zum fünften Zeitpunkt t5 wird dann auch das zweite Schaltelement S2 der Halbbrückenschaltung ausgeschaltet.

Während der zweiten Halbperiode HP2 arbeitet die Resonanzwandler-Schaltungsanordnung zwischen dem dritten und dem vierten Zeitpunkt t3, t4 wieder als reiner Resonanzwandler. Durch das Ausschalten des bidirektionalen Schaltelements S3 zum vierten Zeitpunkt t4 fließt dann die in der Resonanzinduktivität L gespeicherte Energie über die zweite Diode DB2 des Diodenpaars DB1, DB2, welche nun als Freilaufdiode fungiert, und wiederum über die Primärwicklung Wp des Transformators, wobei in der zweiten Sekundärwicklung Ws2 des Transformators auf der Sekundärseite RWs ein Strom induziert wird. Das erste Schaltelement S1 der Halbbrückenschaltung bleibt in der gesamten zweiten Halbperiode HP2 ausgeschaltet und wird erst wieder zum fünften Zeitpunkt t5, welcher den Beginn der nächsten, ersten Halbperiode HP1 darstellt, um eine nicht dargestellte Totzeit verzögert wieder gemeinsam mit dem bidirektionalen Schaltelement S3 eingeschaltet.

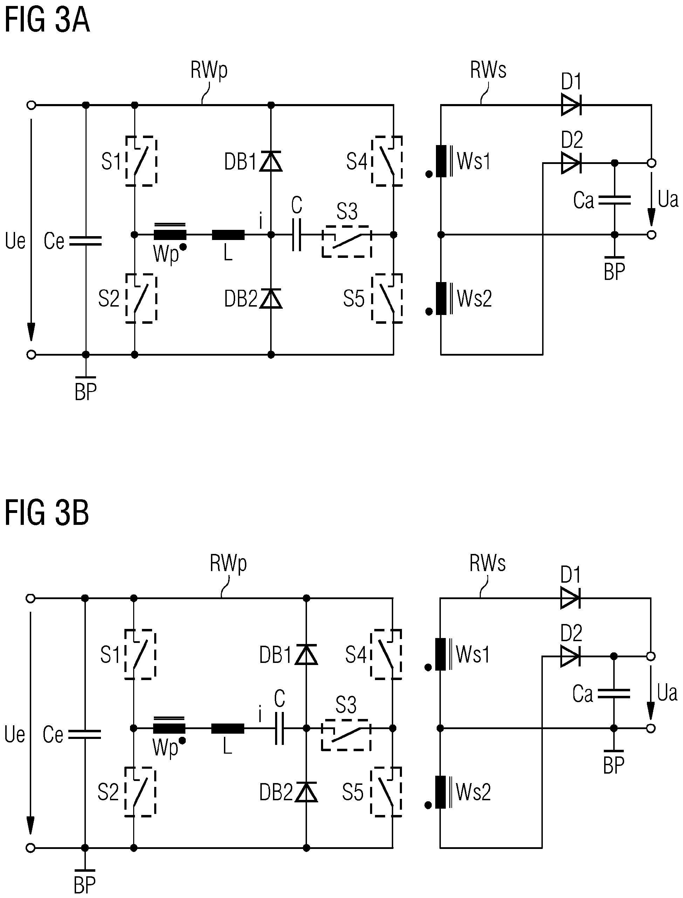

Figur 3a zeigt eine weitere Ausführungsform der erfindungsgemäßen Resonanzwandler-Schaltungsanordnung. An die Schaltungsanordnung wird wieder eingangsseitig eine Eingangsspannung Ue angelegt, welche auf das Bezugspotential BP bezogen sein kann. Eingangsseitig ist ebenfalls eine Eingangskapazität Ce vorgesehen. Die Schaltung umfasst weiterhin eine galvanische Trennung bzw. einen Transformator mit einer Primärwicklung Wp auf der Primärseite RWp und Sekundärwicklungen Ws1, Ws2 auf der Sekundärseite RWs. Weiterhin weist die Schaltung auf der Sekundärseite RWs eine Gleichrichtereinheit mit zwei Dioden D1, D2 auf sowie eine Ausgangskapazität Ca auf, an welcher die Ausgangsspannung Ua abfällt. Die Ausgangsspannung Ua kann ebenfalls auf das Bezugspotential BP bezogen sein oder z.B. gegenüber der Primärseite RWp floaten.

Auf der Primärseite RWp sind parallel zur Eingangskapazität Ce wieder zwei Schaltelemente S1, S2 angeordnet, welche in Serie geschaltet sind. Weiterhin sind auf der Primärseite zwei weitere Schaltelemente S4, S5 vorgesehen, welche ebenfalls in Serie angeordnet sind und mit den beiden eingangsseitigen Schaltelementen S1, S2 eine Vollbrückenschaltung zum Ansteuern der Resonanzwandler-Schaltungsanordnung bilden. Dazu werden jeweils zwei der vier Schaltelemente S1, S2, S4, S5 gleichzeitig ein- bzw. ausgeschaltet. Es können beispielsweise in der Vollbrückenschaltung diagonal gegenüberliegend angeordnete Schaltelemente S1, S5 bzw. S2, S4 gleichzeitig ein- bzw. ausgeschaltet werden.

An die Mitte der Serienschaltung der beiden eingangsseitigen Schaltelemente S1, S2 bzw. einer ersten Halbbrücke aus den Schaltelementen S1, S2 der Vollbrückenschaltung ist wieder ein Anschluss der Primärwicklung Wp angebunden. Der andere Anschluss der Primärwicklung Wp ist mit dem Resonanzkreis verbunden, welcher von einer Resonanzinduktivität L und einer Resonanzkapazität C gebildet wird. Dabei ist der erste Anschluss der Resonanzinduktivität L mit der Primärwicklung Wp und der zweiten Anschluss der Resonanzinduktivität L mit einem ersten Anschluss der Resonanzkapazität C verbunden. Zwischen einem zweiten Anschluss der Resonanzkapazität C und einer Mitte der Serienschaltung der beiden, weiteren Schaltelemente S4, S5 ist im Strompfad i des Resonanzstroms durch die Resonanzinduktivität L und durch die Resonanzkapazität C das bidirektionale Schaltelement S3 angeordnet. D.h. das bidirektionale Schaltelement S3 ist mit dem ersten Anschluss an den zweiten Anschluss der Resonanzkapazität C und mit dem zweiten Anschluss mit der Mitte der Serienschaltung aus der beiden, weiteren primärseitigen Schaltelemente S4, S5 verbunden, welche eine zweite Halbbrücke für die Vollbrückenschaltung bildet.

Weiterhin ist ebenfalls ein Diodenpaar DB1, DB2 vorgesehen. Die beiden Dioden DB1, DB2 des Diodenpaar DB1, DB2 sind in Serie angeordnet und fungieren als Freilaufdioden DB1, DB2 für die integrierte Funktionalität des Tiefsetzstellers. Dabei ist eine Mitte der Serienschaltung des Diodenpaars DB1, DB2 mit dem zweiten Anschluss der Resonanzinduktivität L und mit dem ersten Anschluss der Resonanzkapazität C verbunden. Die jeweiligen Enden der Serienschaltung des Diodenpaars DB1, DB2 sind jeweils mit den entsprechenden Enden der beiden Halbbrücken der Vollbrückenschaltung verbunden, welche von den zwei eingangsseitigen Schaltelementen S1, S2 bzw. den zwei weiteren Schaltelementen S4, S5 gebildet werden.

Im Normalbetrieb - d.h. in einem Betrieb mit Nennspannung - ist das bidirektionale Schaltelement S3 entweder wieder dauerhaft eingeschaltet oder durch eine parallel zum bidirektionalen Schaltelement S3 angeordnete Überbrückungseinheit (Halbleiterschalter, Relais, MEMS, etc.) überbrückt bzw. kurzgeschlossen. Die Schaltung arbeitet dann als Resonanzwandler im Resonanzbetrieb. Ist eine Absenkung der Ausgangsspannung Ua des Resonanzwandlers erforderlich, so wird das bidirektionale Schaltelement S3 - pulsweitenmoduliert bzw. in Abhängigkeit von der Ausgangsspannung Ua - angesteuert. Dabei wird das bidirektionale Schaltelement S3 wieder synchron mit den jeweils einzuschaltenden Schaltelementen S1, S5 bzw. S2, S4 eingeschaltet und vor den jeweils eingeschalteten Schaltelementen S1, S5 bzw. S2, S4 ausgeschaltet, um die Funktionalität BU eines Tiefsetzstellers in den Resonanzwandler zu integrieren.

Figur 3b zeigt eine weitere Ausführungsform der erfindungsgemäßen Resonanzwandler-Schaltungsanordnung mit einer Vollbrückenschaltung zur Ansteuerung, wobei die Vollbrückenschaltung wieder von den zwei, eingangsseitig angeordneten Schaltelementen S1, S2 und zwei, weiteren primärseitigen Schaltelementen S4, S5 gebildet wird. Diese Ausführungsform unterscheidet sich von der in Figur 3a dargestellten Schaltungsanordnung nur durch die Anordnung des Diodenpaars DB1, DB2 in der Schaltung. Bei der in Figur 3b beispielhaft dargestellten Aufführungsform der erfindungsgemäßen Schaltungsanordnung ist die Resonanzkapazität C wieder mit dem ersten Anschluss mit der Resonanzinduktivität L verbunden. Allerdings ist nun die Mitte der Serienschaltung des Diodenpaars DB1, DB2 mit dem zweiten Anschluss der Resonanzkapazität C und mit dem ersten Anschluss des bidirektionalen Schaltelements S3 verbunden. Die Enden der Serienschaltung des Diodenpaars DB1, DB2 sind wieder mit den jeweiligen Enden der beiden Halbbrücken der Vollbrückenschaltung verbunden, welche von den zwei eingangsseitigen Schaltelementen S1, S2 bzw. den zwei weiteren Schaltelementen S4, S5 gebildet werden.

## Patentansprüche

1. Resonanzwandler mit einer galvanischen Trennung (Wp, Ws1, Ws2), welcher primärseitig zumindest eine Resonanzinduktivität (L), zumindest eine Resonanzkapazität (C1, C2, C) und zumindest zwei Schaltelemente (S1, S2) umfasst, wobei durch ein alternierendes Schalten der zumindest zwei primärseitigen Schaltelemente (S1, S2) mit einer vorgegebenen Schaltfrequenz ein Resonanzstrom durch die zumindest eine Resonanzinduktivität (L) und die zumindest eine Resonanzkapazität (C1, C2, C) fließt, **dadurch gekennzeichnet, dass** der Resonanzwandler ein bidirektionales Schaltelement (S3) und ein Diodenpaar (DB1, DB2) umfasst, und dass das bidirektionale Schaltelement (S3) in einem Strompfad (i) des Resonanzstroms durch die zumindest eine Resonanzinduktivität (L) und durch die zumindest eine Resonanzkapazität (C1, C2, C) angeordnet ist, und dass eine Mitte einer Serienschaltung des Diodenpaars (DB1, DB2)
mit einem Anschluss der zumindest einen Resonanzinduktivität (L) oder mit einem Anschluss der zumindest einen Resonanzkapazität (C1, C2, C) und ein jeweiliges Ende der Serienschaltung des Diodenpaars (DB1, DB2) mit jeweils einem Schaltelement (S1, S2) der zumindest zwei primärseitigen Schaltelemente (S1, S2) derart verbunden sind, dass eine Funktionalität (BU) eines Tiefsetzstellers integriert ist, in dem Fall dass das bidirektionale Schaltelement (S3) mit einem jeweils einzuschaltenden Schaltelement (S1, S2) der zumindest zwei primärseitigen Schaltelemente (S1, S2) eingeschaltet wird und vor einem jeweils auszuschaltenden Schaltelement (S1, S2) der zumindest zwei primärseitigen Schaltelemente (S1, S2) ausgeschaltet wird, wobei die zumindest eine Resonanzinduktivität (L) als Induktivität und das Diodenpaars (DB1, DB2) als Freilaufdioden für die Funktionalität (BU) des Tiefsetzstellers genutzt sind.

2. Resonanzwandler nach Anspruch 1, der eingerichtet ist, das bidirektionale Schaltelement (S3) in Anhängigkeit von einer Ausgangsspannung (Ua) des Resonanzwandlers zu steuern.

3. Resonanzwandler nach einem der Ansprüche 1 bis 2, wobei während eines Normalbetriebs des Resonanzwandlers das bidirektionale Schaltelement (S3) dauerhaft eingeschaltet ist.

4. Resonanzwandler nach einem der vorangegangenen Ansprüche, wobei eine Überbrückungseinheit vorgesehen ist, welche parallel zum bidirektionalen Schaltelement (S3) angeordnet ist, wobei durch Schließen der Überbrückungseinheit das bidirektionale Schaltelement (S3) überbrückt ist.

5. Resonanzwandler nach einem der vorangegangenen Ansprüche, wobei die zumindest zwei primärseitigen Schaltelemente (S1, S2) eingangsseitig als Halbbrückenschaltung angeordnet sind.

6. Resonanzwandler nach Anspruch 5, wobei die Mitte der Serienschaltung des Diodenpaars (DB1, DB2) mit einem Anschluss der zumindest einen Resonanzinduktivität (L) verbunden ist, welcher einem ersten Anschluss des bidirektionalen Schaltelements (S3) verbunden ist, und dass die zumindest eine Resonanzkapazität (C1, C2) durch zwei in Serie angeordnete Kapazitäten (C1, C2) gebildet ist, wobei eine Mitte der Serienschaltung der zwei Kapazitäten (C1, C2) mit einem zweiten Anschluss des bidirektionalen Schaltelements (S3) und die jeweiligen Enden der Serienschaltung der zwei Kapazitäten (C1, C2) mit den jeweiligen Enden der Serienschaltung des Diodenpaars (DB1, DB2) sowie mit jeweils einem der zumindest zwei primärseitigen Schaltelemente (S1, S2) verbunden sind.

7. Resonanzwandler nach einem der Ansprüche 1 bis 4, wobei primärseitig zwei weitere Schaltelemente (S4, S5) vorgesehen sind, welche mit den zumindest zwei primärseitigen Schaltelementen (S1, S2) eine Vollbrückenschaltung bilden.

8. Resonanzwandler nach Anspruch 7, wobei die Mitte der Serienschaltung des Diodenpaars (DB1, DB2) mit einem Anschluss der zumindest einen Resonanzinduktivität (L) verbunden ist, welcher an einen ersten Anschluss der zumindest einen Resonanzkapazität (C) angebunden ist, dass ein zweiter Anschluss der zumindest einen Resonanzkapazität (C) mit einem ersten Anschluss des bidirektionalen Schaltelements (S3) verbunden ist, dass an einen zweiten Anschluss des bidirektionalen Schaltelements (S3) eine Mitte einer Serienschaltung aus den zwei, weiteren primärseitigen Schaltelementen (S4, S5) angebunden ist, und dass die jeweiligen Enden der Serienschaltung des Diodenpaars (DB1, DB2) jeweils mit einem Schaltelement (S1, S2) der zumindest zwei primärseitigen Schaltelemente (S1, S2) sowie jeweils mit einem der zwei, weiteren primärseitigen Schaltelemente (S4, S5) verbunden sind.

9. Resonanzwandler nach Anspruch 7, wobei die zumindest eine Resonanzkapazität (C) mit einem ersten Anschluss an die zumindest eine Resonanzinduktivität (L) angebunden ist, dass ein zweiter Anschluss der Resonanzkapazität (C) mit einem ersten Anschluss des bidirektionalen Schaltelements (S3) und mit der Mitte der Serienschaltung des Diodenpaars (DB1, DB2) verbunden ist, dass an einen zweiten Anschluss des bidirektionalen Schaltelements (S3) eine Mitte einer Serienschaltung aus den zwei, weiteren primärseitigen Schaltelementen (S4, S5) angebunden ist, und dass die jeweiligen Enden der Serienschaltung des Diodenpaars (DB1, DB2) jeweils mit einem Schaltelement (S1, S2) der zumindest zwei primärseitigen Schaltelemente (S1, S2) sowie jeweils mit einem der zwei, weiteren primärseitigen Schaltelemente (S4, S5) verbunden sind.

10. Resonanzwandler nach einem der vorangegangenen Ansprüche, wobei das bidirektionale Schaltelement (S3) aus antiseriell verschalteten Transistoren aufgebaut ist.

11. Resonanzwandler nach einem der Ansprüche 1 bis 10, wobei als bidirektionales Schaltelement (S3) ein Mikro-Elektronisch-Mechanisches-System, kurz MEMS, vorgesehen ist.

## Claims

1. Resonant converter with a galvanic isolation (Wp, Ws1, Ws2), which on the primary side comprises at least one resonant inductor (L), at least one resonant capacitor (C1, C2, C) and at least two switching elements (S1, S2), wherein thanks to alternating switching of the at least two primary-side switching elements (S1, S2) at a specified switching frequency a resonant current flows through the at least one resonant inductor (L) and the at least one resonant capacitor (C1, C2, C), **characterised in that** the resonant converter comprises a bidirectional switching element (S3) and a diode pair (DB1, DB2), and that the bidirectional switching element (S3) is arranged in a current path (i) of the resonant current through the at least one resonant inductor (L) and through the at least one resonant capacitor (C1, C2, C), and that a centre of a series circuit of the diode pair (DB1, DB2) is connected to a terminal of the at least one resonant inductor (L) or to a terminal of the at least one resonant capacitor (C1, C2, C) and a respective end of the series circuit of the diode pair (DB1, DB2) is connected in each case to a switching element (S1, S2) of the at least two primary-side switching elements (S1, S2), such that a functionality (BU) of a voltage reduction unit is integrated, in the event that the bidirectional switching element (S3) is activated with a switching element (S1, S2), to be activated in each case, of the at least two primary-side switching elements (S1, S2) and before a switching element (S1, S2), to be deactivated in each case, of the at least two primary-side switching elements (S1, S2), wherein the at least one resonant inductor (L) is used as an inductor and the diode pair (DB1, DB2) is used as free-wheeling diodes for the functionality (BU) of the voltage reduction unit.

2. Resonant converter according to claim 1, which is configured to control the bidirectional switching element (S3) as a function of an output voltage (Ua) of the resonant converter.

3. Resonant converter according to one of claims 1 to 2, wherein during a normal mode of the resonant converter the bidirectional switching element (S3) is permanently activated.

4. Resonant converter according to one of the preceding claims, wherein a bridging unit is provided, which is arranged in parallel with the bidirectional switching element (S3), wherein the bidirectional switching element (S3) is bridged by closing the bridging unit.

5. Resonant converter according to one of the preceding claims, wherein the at least two primary-side switching elements (S1, S2) are arranged on the input side as a half-bridge circuit.

6. Resonant converter according to claim 5, wherein the centre of the series circuit of the diode pair (DB1, DB2) is connected to a terminal of the at least one resonant inductor (L), which is connected to a first terminal of the bidirectional switching element (S3), and that the at least one resonant capacitor (C1, C2) is formed by two capacitors (C1, C2) arranged in series, wherein a centre of the series circuit of the two capacitors (C1, C2) is connected to a second terminal of the bidirectional switching element (S3) and the respective ends of the series circuit of the two capacitors (C1, C2) are connected to the respective ends of the series circuit of the diode pair (DB1, DB2) and in each case to one of the at least two primary-side switching elements (S1, S2).

7. Resonant converter according to one of claims 1 to 4, wherein on the primary side two further switching elements (S4, S5) are provided, which with the at least two primary-side switching elements (S1, S2) form a full-bridge circuit.

8. Resonant converter according to claim 7, wherein the centre of the series circuit of the diode pair (DB1, DB2) is connected to a terminal of the at least one resonant inductor (L), which is connected to a first terminal of the at least one resonant capacitor (C), that a second terminal of the at least one resonant capacitor (C) is connected to a first terminal of the bidirectional switching element (S3), that a centre of a series circuit made up of the two further primary-side switching elements (S4, S5) is connected to a second terminal of the bidirectional switching element (S3), and that the respective ends of the series circuit of the diode pair (DB1, DB2) are connected in each case to a switching element (S1, S2) of the at least two primary-side switching elements (S1, S2) and in each case to one of the two further primary-side switching elements (S4, S5).

9. Resonant converter according to claim 7, wherein the at least one resonant capacitor (C) is connected by a first terminal to the at least one resonant inductor (L), that a second terminal of the resonant capacitor (C) is connected to a first terminal of the bidirectional switching element (S3) and to the centre of the series circuit of the diode pair (DB1, DB2), that a centre of a series circuit made up of the two further primary-side switching elements (S4, S5) is connected to a second terminal of the bidirectional switching element (S3), and that the respective ends of the series circuit of the diode pair (DB1, DB2) are in each case connected to a switching element (S1, S2) of the at least two primary-side switching elements (S1, S2) and in each case to one of the two further primary-side switching elements (S4, S5).

10. Resonant converter according to one of the preceding claims, wherein the bidirectional switching element (S3) is composed of antiserially switched transistors.

11. Resonant converter according to one of claims 1 to 10, wherein a micro-electro-mechanical system, MEMS for short, is provided as a bidirectional switching element (S3).

## Revendications

1. Convertisseur à résonance avec une séparation galvanique (Wp, Ws1, Ws2), qui comprend côté primaire au moins une inductance de résonance (L), au moins une capacité de résonance (C1, C2, C) et au moins deux éléments de commutation (S1, S2), dans lequel, par une commutation alternée des au moins deux éléments de commutation (S1, S2) côté primaire avec une fréquence de commutation prédéterminée, un courant de résonance circule à travers la au moins une inductance de résonance (L) et la au moins une capacité de résonance (C1, C2, C), **caractérisé en ce que** le convertisseur à résonance comprend un élément de commutation bidirectionnel (S3) et une paire de diodes (DB1, DB2), et **en ce que** l'élément de commutation bidirectionnel (S3) est disposé dans un trajet de courant (i) du courant de résonance à travers la au moins une inductance de résonance (L) et à travers la au moins une capacité de résonance (C1, C2, C), et **en ce qu'**un milieu d'un circuit en série de la paire de diodes (DB1, DB2) avec une connexion de la au moins une inductance de résonance (L) ou avec une connexion de la au moins une capacité de résonance (C1, C2, C) et une extrémité respective du circuit en série de la paire de diodes (DB1, DB2) avec, respectivement, un élément de commutation (S1, S2) des au moins deux éléments de commutation (S1, S2) côté primaire sont reliés de telle sorte qu'une fonctionnalité (BU) d'un convertisseur abaisseur est intégrée, dans le cas où l'élément de commutation bidirectionnel (S3) est relié à un élément de commutation (S1, S2) respectif à activer des au moins deux éléments de commutation (S1, S2) côté primaire et est désactivé en amont d'un élément de commutation (S1, S2) respectif à désactiver des au moins deux éléments de commutation (S1, S2) côté primaire, dans lequel la au moins une inductance de résonance (L) est utilisée comme inductance et la paire de diodes (DB1, DB2) est utilisée comme diodes de roue libre pour la fonctionnalité (BU) du convertisseur abaisseur.

2. Convertisseur à résonance selon la revendication 1, qui est conçu pour commander l'élément de commutation bidirectionnel (S3) en fonction d'une tension de sortie (Ua) du convertisseur à résonance.

3. Convertisseur à résonance selon l'une des revendications 1 à 2, dans lequel, pendant un fonctionnement normal du convertisseur à résonance, l'élément de commutation bidirectionnel (S3) est activé en permanence.

4. Convertisseur à résonance selon l'une des revendications précédentes, dans lequel une unité de court-circuit est prévue, laquelle est disposée parallèlement à l'élément de commutation bidirectionnel (S3), dans lequel l'élément de commutation bidirectionnel (S3) est court-circuité par la fermeture de l'unité de court-circuit.

5. Convertisseur à résonance selon l'une des revendications précédentes, dans lequel les au moins deux éléments de commutation (S1, S2) côté primaire sont disposés côté entrée en tant que circuit en demi-pont.

6. Convertisseur à résonance selon la revendication 5, dans lequel le milieu du circuit en série de la paire de diodes (DB1, DB2) est connecté à une borne de la au moins une inductance de résonance (L), qui est connectée à une première borne de l'élément de commutation bidirectionnel (S3), et la au moins une capacité de résonance (C1, C2) est formée par deux capacités (C1, C2) disposées en série, dans lequel un milieu du circuit en série des deux capacités (C1, C2) est relié à une deuxième borne de l'élément de commutation bidirectionnel (S3) et les extrémités respectives du circuit en série des deux capacités (C1, C2) sont reliées aux extrémités respectives du circuit en série de la paire de diodes (DB1, DB2) ainsi que, respectivement, à l'un des au moins deux éléments de commutation (S1, S2) côté primaire.

7. Convertisseur à résonance selon l'une des revendications 1 à 4, dans lequel deux autres éléments de commutation (S4, S5) sont prévus côté primaire, lesquels forment avec les au moins deux éléments de commutation (S1, S2) côté primaire un circuit en pont complet.

8. Convertisseur à résonance selon la revendication 7, dans lequel le milieu du circuit en série de la paire de diodes (DB1, DB2) est relié à une borne de la au moins une inductance de résonance (L), qui est reliée à une première borne de la au moins une capacité de résonance (C), dans lequel une deuxième borne de la au moins une capacité de résonance (C) est reliée à une première borne de l'élément de commutation bidirectionnel (S3), dans lequel un milieu d'un circuit en série constitué des deux autres éléments de commutation (S4, S5) côté primaire est relié à une deuxième borne de l'élément de commutation bidirectionnel (S3), et dans lequel les extrémités respectives du circuit en série de la paire de diodes (DB1, DB2) sont reliées chacune à un élément de commutation (S1, S2) des au moins deux éléments de commutation (S1, S2) côté primaire ainsi que chacune à l'un des deux autres éléments de commutation (S4, S5) côté primaire.

9. Convertisseur à résonance selon la revendication 7, dans lequel la au moins une capacité de résonance (C) est reliée par une première borne à la au moins une inductance de résonance (L), une deuxième borne de la capacité de résonance (C) est reliée à une première connexion de l'élément de commutation bidirectionnel (S3) et au milieu du circuit en série de la paire de diodes (DB1, DB2), un milieu d'un circuit en série constitué des deux autres éléments de commutation (S4, S5) côté primaire est relié à une deuxième borne de l'élément de commutation bidirectionnel (S3) et les extrémités respectives du circuit en série de la paire de diodes (DB1, DB2) sont reliées, respectivement, à un élément de commutation (S1, S2) des au moins deux éléments de commutation (S1, S2) côté primaire ainsi que, respectivement, à l'un des deux autres éléments de commutation (S4, S5) côté primaire.

10. Convertisseur à résonance selon l'une des revendications précédentes, dans lequel l'élément de commutation bidirectionnel (S3) est constitué de transistors connectés en anti-série.

11. Convertisseur à résonance selon l'une des revendications 1 à 10, dans lequel un système micro-électro-mécanique, en abrégé MEMS, est prévu comme élément de commutation bidirectionnel (S3) .
